# EUROPÄISCHE PATENTANMELDUNG

(11) **EP 3 499 159 A1**
(43) Veröffentlichungstag der Anmeldung: **19.06.2019**
(21) Anmeldenummer: 17020569.4
(22) Anmeldetag: 12.12.2017
(51) Int. Cl.: F25J 3/02, C10G 5/02, C10L 3/10

(54) **VERFAHREN UND ANLAGE ZUR HERSTELLUNG VON FLÜSSIGERDGAS**

(71) Anmelder: Linde Aktiengesellschaft, 80331 München (DE)
(72) Erfinder: Fritz, Helmut, 81375 München (DE); Leitmayr, Werner, 86633 Neuburg/Donau (DE); Keller, Tobias, 83620 Feldkirchen-Westerham (DE); Voss, Christian, 82538 Geretsried (DE)

(57) **Zusammenfassung**

Es wird ein Verfahren (100) zur Herstellung von Flüssigerdgas unter Verwendung eines Einsatzgemischs, das zumindest Methan, eine oder mehrere tiefer als Methan siedende Komponenten und einen oder mehrere höher als Methan siedende Kohlenwasserstoffe enthält, wobei der oder die höher als Methan siedenden Kohlenwasserstoffe einen oder mehrere hocherstarrende Kohlenwasserstoffe mit einem Erstarrungspunkt von mehr als -50 °C aufweisen, vorgeschlagen. Es ist vorgesehen, dass das Einsatzgemisch einer Druckwechseladsorption (10) zugeführt wird, in der eine Methan enthaltende erste Fraktion und eine Methan enthaltende zweite Fraktion gebildet werden, dass die Methan enthaltende erste Fraktion neben dem Methan zumindest den überwiegenden Teil der leichter als Methan siedenden Komponenten aus dem Einsatzgemisch enthält und arm an oder frei von den schwerer als Methan siedenden Kohlenwasserstoffen ist, und dass die Methan enthaltende zweite Fraktion neben dem Methan zumindest den überwiegenden Teil der schwerer als Methan siedenden Kohlenwasserstoffe aus dem Einsatzgemisch enthält und arm an oder frei von den leichter als Methan siedenden Komponenten ist, und dass die Methan enthaltende erste Fraktion oder ein Teil hiervon einer Verflüssigung (20) zugeführt wird. Eine entsprechende Anlage ist ebenfalls Gegenstand der Erfindung.

## Beschreibung

Die Erfindung betrifft ein Verfahren und eine Anlage zur Herstellung von Flüssigerdgas gemäß den jeweiligen Oberbegriffen der unabhängigen Patentansprüche.

### Stand der Technik

Verfahren und Anlagen zur Verflüssigung von Erdgas und damit zur Herstellung von Flüssigerdgas sind in unterschiedlichen Ausgestaltungen aus dem Stand der Technik bekannt. Für eine Übersicht sei auf einschlägige Fachliteratur, beispielsweise den Artikel "Natural Gas" in Ullmann's Encyclopedia of Industrial Chemistry, Onlineveröffentlichung 15. Juli 2006, DOI: 10.1002/14356007.a17_073.pub2, insbesondere Abschnitt 3.3, "Production", verwiesen. Die Verflüssigung von Erdgas erfolgt insbesondere, um dessen Transportierbarkeit, insbesondere in Tankschiffen, zu verbessern. Das mittels entsprechender Verfahren und Anlagen hergestellte Flüssigerdgas wird häufig mit dem englischen Fachterminus LNG (Liquefied Natural Gas) bezeichnet. Es handelt sich dabei um eine überwiegend oder ausschließlich Methan enthaltende tiefkalte Flüssigkeit. Flüssigerdgas enthält typischerweise nur einen Teil der im (Roh-)Erdgas enthaltenen Komponenten.

Bei der Verflüssigung von Erdgas zu Flüssigerdgas kann es bereits bei Anwesenheit sehr kleiner Mengen bestimmter, nachfolgend als "kritisch" bezeichneter, Kohlenwasserstoff-Spezies zu Verlegungen und zur Blockade von Anlagenteilen kommen. Dies kann zum vollständigen Ausfall entsprechender Anlagen führen.

Als kritische Kohlenwasserstoff-Spezies sind insbesondere Benzol und Neopentan anzusehen, welche als Reinstoffe bereits bei den vergleichsweise hohen Temperaturen von +5 °C bzw. -16.6°C zum Feststoff erstarren. Eine Feststoffbildung erfolgt hingegen nicht, falls neben den kritischen Kohlenwasserstoff-Spezies noch weitere Kohlenwasserstoffe in ausreichender Menge in dem zu verflüssigenden Erdgas vorliegen, welche im relevanten Temperaturbereich kondensieren, aber nicht erstarren. Diese Begleitkomponenten können diese kritischen Kohlenwasserstoff-Spezies in Lösung halten und das Erstarren verhindern bzw. verzögern, wodurch eine Abscheidung oder Auswaschung in Lösung ermöglicht wird. Nach der Abscheidung oder Auswaschung kann das Erdgas auf die für die Verflüssigung erforderlichen sehr tiefen Temperaturen abgekühlt werden, ohne Verlegungen durch die kritischen Kohlenwasserstoff-Spezies befürchten zu müssen.

Damit eine Auswaschung ermöglicht werden kann, muss der Partialdruck bzw. die Konzentration der als Lösungsmittel geeigneten Komponenten so hoch sein, dass diese bereits bei Temperaturen oberhalb der Erstarrungstemperatur der kritischen Kohlenwasserstoff-Spezies kondensieren und als Flüssigkeit vorliegen. Diese kann z.B. in Waschkolonnen dem Gas im Gegenstrom entgegengeführt werden, wodurch die kritischen Kohlenwasserstoff-Spezies ausgewaschen werden können.

Wie auch nachfolgend noch erläutert, ist ein entsprechendes Vorgehen zur Entfernung kritischer Kohlenwasserstoff-Spezies jedoch nicht immer möglich. Auch eine anderweitige Abtrennung entsprechender kritischer Kohlenwasserstoff-Spezies ist herkömmlicherweise nicht möglich oder unpraktikabel.

Die vorliegende Erfindung stellt sich daher die Aufgabe, eine Erdgasverflüssigung bei Vorliegen kritischer Kohlenwasserstoff-Spezies auch in solchen Situationen zu ermöglichen bzw. sicherer auszugestalten.

### Offenbarung der Erfindung

Vor diesem Hintergrund schlägt die vorliegende Erfindung ein Verfahren und eine Anlage mit den jeweiligen Merkmalen der unabhängigen Patentansprüche vor. Bevorzugte Ausgestaltungen der vorliegenden Erfindung sind Gegenstand der abhängigen Patentansprüche sowie der nachfolgenden Beschreibung.

Vor der Erläuterung der Merkmale und Vorteile der vorliegenden Erfindung werden noch einige Grundlagen und die verwendeten Begriffe erläutert.

Flüssige und gasförmige Gemische können im hier verwendeten Sprachgebrauch reich oder arm an einer oder mehreren Komponenten sein, wobei "reich" für einen Gehalt von wenigstens 99%, 99,5%, 99,9% oder 99,99% und "arm" für einen Gehalt von höchstens 1%, 0,1% oder 0,01% auf molarer, Gewichts- oder Volumenbasis stehen kann. Der Begriff "überwiegend" kann der Definition von "reich" entsprechen.

Komponentengemische können im hier verwendeten Sprachgebrauch ferner angereichert oder abgereichert an einer oder mehreren Komponenten sein, wobei sich diese Begriffe auf einen entsprechenden Gehalt in einem anderen Komponentengemisch beziehen, unter Verwendung dessen das betrachtete Komponentengemisch gebildet wurde. Ein Komponentengemisch ist "angereichert", wenn es zumindest den 1,5-fachen, 2-fachen, 5-fachen, 10-fachen, 100-fachen oder 1.000-fachen Gehalt der bezeichneten Komponente(n) aufweist, und "abgereichert", wenn es höchstens den 0,75-fachen, 0,5-fachen, 0,1-fachen, 0,01-fachen oder 0,001 - fachen Gehalt der bezeichneten Komponente(n) aufweist.

Die vorliegende Anmeldung verwendet zur Charakterisierung von Drücken und Temperaturen die Begriffe "Druckniveau" und "Temperaturniveau", wodurch zum Ausdruck gebracht werden soll, dass entsprechende Drücke und Temperaturen in einer entsprechenden Anlage nicht in Form exakter Druck- bzw. Temperaturwerte verwendet werden müssen, um das erfinderische Konzept zu verwirklichen. Jedoch bewegen sich derartige Drücke und Temperaturen typischerweise in bestimmten Bereichen, deren Maximal- und Minimalwerte sich um beispielsweise nicht mehr als 1%, 5%, 10%, 20% oder sogar 50% unterscheiden.

Entsprechende Druckniveaus und Temperaturniveaus können dabei in disjunkten Bereichen liegen oder in Bereichen, die einander überlappen. Insbesondere schließen beispielsweise Druckniveaus unvermeidliche oder zu erwartende Druckverluste, beispielsweise aufgrund von Abkühlungseffekten, ein. Entsprechendes gilt für Temperaturniveaus. Bei den hier bezüglich "Absolutdruckniveaus" angegeben Druckwerten handelt es sich jeweils um Absolutdrücke in bar (abs.).

### Vorteile der Erfindung

Wie bereits zuvor angesprochen, ist eine Entfernung von kritischen Kohlenwasserstoff-Spezies vor einer Erdgasverflüssigung durch eine Abscheidung oder Auswaschung derselben möglich, wenn neben den kritischen Kohlenwasserstoff-Spezies noch weitere, als Lösungsmittel für die kritischen Kohlenwasserstoff-Spezies geeignete Kohlenwasserstoffe in ausreichender Menge vorliegen. Diese als Lösungsmittel geeigneten Komponenten müssen im relevanten Temperaturbereich kondensieren, dürfen aber nicht erstarren. Wie erwähnt, muss der Partialdruck bzw. die Konzentration der als Lösungsmittel geeigneten Komponenten so hoch sein, dass diese bereits bei Temperaturen oberhalb der Erstarrungstemperatur der kritischen Kohlenwasserstoff-Spezies kondensieren und als Flüssigkeit vorliegen.

Eine entsprechende Abscheidung oder Auswaschung ist hingegen nicht möglich, wenn der Gehalt an als Lösemittel geeigneten Komponenten nicht hoch genug ist und deren Kondensation aufgrund des geringen Partialdrucks nicht oberhalb der Erstarrungstemperatur erfolgt.

Erdgase, welche beispielsweise ein ungünstiges Verhältnis von Neopentan und Butanen haben, können daher herkömmlicherweise nicht zu Flüssigerdgas verflüssigt werden, weil Neopentan bereits erstarrt, bevor hinreichende Mengen von Butanen oder anderen Kohlenwasserstoffen verflüssigen und das Neopentan in Lösung und damit mobil halten. Im Gegensatz zu Benzol oder Kohlenwasserstoffen mit sieben und/oder Kohlenwasserstoffen mit acht und mehr Kohlenstoffatomen kann Neopentan aber auch nicht gezielt bzw. selektiv mittels Adsorption aus Erdgas entfernt werden.

Durch die nun erfindungsgemäß vorgeschlagenen Maßnahmen können hingegen auch herkömmlicherweise als für die Verflüssigung ungünstig angesehene Erdgase, die die genannten kritischen Kohlenwasserstoff-Spezies enthalten, verflüssigt werden, ohne dass eine Verlegung von Anlagenteilen und ein entsprechender Anlagenausfall zu befürchten wäre. Auf diese Weise können durch den Einsatz der Erfindung weitere Erdgase einer Erdgasverflüssigung zugänglich gemacht werden. Durch die vorliegende Erfindung kann Erdgas mit hohem Neopentan- und /oder Benzolgehalt und gleichzeitig geringem Gehalt an Propan und/oder Butan derart konditioniert werden, dass es tiefstkalt verflüssigt, gelagert und transportiert werden kann. Dadurch können Erdgase mit diesen Eigenschaften der Ausbeutung und Vermarktung zugänglich gemacht werden. Insbesondere durch die vorteilhafterweise zusätzlich zur Druckwechseladsorption vorgeschlagenen Maßnahmen, insbesondere die thermische Trennung, kann dabei praktisch das gesamte Erdgas bzw. Einsatzgemisch verwertet werden. Durch den Einsatz lediglich der Druckwechseladsorption sind hingegen ca. 70% des Heizwertes zugänglich.

Die vorliegende Erfindung beruht insbesondere auf der Erkenntnis, dass das zu verflüssigende Erdgas bzw. ein entsprechendes Einsatzgemisch, das insbesondere durch eine geeignete Aufbereitung aus Erdgas gewonnen werden kann, und das entsprechende kritische Kohlenwasserstoff-Spezies enthält, vorteilhafterweise einer Druckwechseladsorption (PSA) unterzogen wird und in eine überwiegend oder ausschließlich Methan und ggf. tiefer als Methan siedende Komponenten enthaltende Fraktion (auch als C1 minus-Fraktion und nachfolgend auch als "erste" Fraktion, bezeichnet) sowie eine überwiegend oder ausschließlich Methan und höher als Methan siedende Komponenten enthaltende Fraktion (auch als C1 plus-Fraktion und nachfolgend auch als "zweite" Fraktion bezeichnet) getrennt wird.

Die C1 minus-Fraktion verbleibt auf einem vergleichsweise hohen Druckniveau, auf dem sie die Druckwechseladsorption verlässt, und kann auf diesem der Verflüssigung zugeführt werden. Sie ist vorteilhafterweise praktisch frei von allen höher als Methan siedenden Kohlenwasserstoffen des eingesetzten Erdgases. Die C1 plus-Fraktion enthält hingegen vorteilhafterweise praktisch alle höhersiedenden Kohlenwasserstoffe des eingesetzten Erdgases, darunter die kritischen Kohlenwasserstoff-Spezies wie z.B. Neopentan oder Benzol und einen gegenüber dem Erdgas bzw. dem verwendeten Einsatzgemisch stark verminderten Methananteil. Diese bei vergleichsweise niedrigem Druck anfallende Fraktion kann insbesondere wieder verdichtet und einer thermischen Trennung zugeführt werden. Spezifische Merkmale und Vorteile einer entsprechenden Behandlung dieser Fraktion werden weiter unten erläutert.

Insgesamt schlägt die vorliegende Erfindung ein Verfahren zur Herstellung von Flüssigerdgas unter Verwendung eines Einsatzgemischs, das zumindest Methan, eine oder mehrere tiefer als Methan siedende Komponenten und einen oder mehrere höher als Methan siedende Kohlenwasserstoffe enthält, vor. Das Einsatzgemisch kann dabei im Rahmen der vorliegenden Erfindung, wie auch unten noch näher erläutert, insbesondere durch eine Aufbereitung aus Erdgas gewonnen werden.

Der oder die höher als Methan siedenden Kohlenwasserstoffe, der oder die in dem Einsatzgemisch enthalten sind, umfassen einen oder mehrere Kohlenwasserstoffe einem Erstarrungspunkt von mehr als -50 °C, insbesondere von -30 °C bis +30°C, weiter insbesondere von -20 °C bis +20 °C. Der Erstarrungspunkt bezieht sich dabei jeweils auf die Reinsubstanz bei Normbedingungen oder auf einem Druckniveau, auf dem eine Erdgasverflüssigung typischerweise durchgeführt wird, insbesondere einem Absolutdruckniveau von 20 bis 40 bar, insbesondere von 25 bis 30 bar. Kohlenwasserstoffe mit Erstarrungspunkten in den genannten Bereichen werden nachfolgend auch als "hocherstarrende" Kohlenwasserstoffe bezeichnet. Diese umfassen insbesondere die zuvor als "kritische Kohlenwasserstoff-Spezies" bezeichneten Verbindungen Neopentan und Benzol.

Wie auch nachfolgend noch erläutert, können in dem Einsatzgemisch aber neben dem oder den hocherstarrenden Kohlenwasserstoffen auch noch weitere, höhere als Methan siedende Kohlenwasserstoffe enthalten sein, insbesondere Ethan und/oder Propan und/oder Butan und ein oder mehrere entsprechende ungesättigte Kohlenwasserstoffe.

Erfindungsgemäß wird das Einsatzgemisch einer Druckwechseladsorption zugeführt, in der eine Methan enthaltende erste Fraktion und eine Methan enthaltende zweite Fraktion gebildet werden. Die Druckwechseladsorption arbeitet dabei in grundsätzlich bekannter Weise und unter Verwendung bekannter, sich für den hier in Frage kommenden Zweck eignender Adsorbentien.

Bei der Druckwechseladsorption wird ein Einsatzgemisch gasförmig auf einem erhöhten Druckniveau in einen oder mehrere Behälter, der oder die mit einem oder mehreren Adsorbentien gefüllt ist oder sind, eingeleitet, so dass dieser oder diese durchströmt werden. Eine oder mehrere Komponenten des Einsatzgemischs werden dabei an das oder die Adsorbentien adsorbiert. Am Ausgang des oder der Behälter kann eine Fraktion entnommen werden, die gegenüber dem Einsatzgemisch an den adsorbierenden Komponenten abgereichert, insbesondere auch im Wesentlichen frei hiervon, und an den nicht adsorbierenden Komponenten angereichert ist. Diese Fraktion entspricht vorliegend die Methan enthaltende erste Fraktion.

Nach einer Weile sind das oder die Adsorbentien in einer Weise gesättigt, dass keine weitere Adsorption mehr möglich ist bzw. diese für die jeweilige Trennaufgabe nicht mehr ausreicht. Daher wird nun ein Ausgang für die zuvor gebildete Fraktion, die gegenüber dem Einsatzgemisch an den adsorbierenden Komponenten abgereichert, insbesondere auch im Wesentlichen frei hiervon, und an den nicht adsorbierenden Komponenten angereichert ist, geschlossen. Es erfolgt eine Druckabsenkung in dem oder den Behältern auf ein geringeres Druckniveau. Bei diesem wird oder werden die zuvor adsorbierten Komponenten wieder desorbiert und dieser oder diese kann oder können über einen entsprechenden Auslass abgeführt werden. Zwei wechselseitig be- und entladene Behälter ermöglichen einen kontinuierlichen Betrieb. Um den Überstand an desorbierten Komponenten auszutreiben, kann auch mit einem Anteil des gewünschten Produktes nachgespült werden, um Verunreinigungen zu vermeiden.

Im Rahmen der vorliegenden Erfindung wird die Druckwechseladsorption derart durchgeführt, dass die Methan enthaltende erste Fraktion neben dem Methan zumindest den überwiegenden Teil der leichter als Methan siedenden Komponenten aus dem Einsatzgemisch enthält und arm an oder frei von den schwerer als Methan siedenden Kohlenwasserstoffen ist. Letztere adsorbieren als bevorzugt an das oder die verwendeten Adsorbentien, während die leichter als Methan siedenden Komponenten nicht adsorbieren. Methan adsorbiert teilweise. Die Methan enthaltende zweite Fraktion enthält neben dem Methan hingegen zumindest den überwiegenden Teil der schwerer als Methan siedenden Kohlenwasserstoffe aus dem Einsatzgemisch und ist arm an oder frei von den leichter als Methan siedenden Komponenten.

Die Methan enthaltende erste Fraktion ist vorteilhafterweise im Wesentlichen frei von den hocherstarrenden Komponenten. Insbesondere beträgt ein (Rest-)Gehalt an der oder den hocherstarrenden Komponenten ... Sie wird daher einer Verflüssigung zugeführt. Durch die Abreicherung an den hocherstarrenden Komponenten ist sichergestellt, dass diese in der Verflüssigung nicht ausfrieren und daher Anlagenteile blockieren können.

Im Rahmen der vorliegenden Erfindung wird die Methan enthaltende erste Fraktion mittels der Druckwechseladsorption vorteilhafterweise auf einem Absolutdruckniveau von 20 bis 40 bar, insbesondere von 25 bis 35 bar, beispielsweise ca. 28 bar, bereitgestellt, und die Methan enthaltende erste Fraktion oder der der Verflüssigung zugeführte Teil hiervon wird der Verflüssigung auf diesem Absolutdruckniveau zugeführt. Auf diese Weise entfällt eine weitere Verdichtung stromab der Druckwechseladsorption und es kann eine direkte Zuführung der Methan enthaltenden ersten Fraktion oder dessen der Verflüssigung zugeführten Teils erfolgen.

Die Methan enthaltende zweite Fraktion wird hingegen in der Druckwechseladsorption typischerweise auf einem Absolutdruckniveau von 0,1 bis 5 bar, insbesondere von 1 bis 2 bar, bereitgestellt. Ein unteratmosphärisches Druckniveau liegt dabei insbesondere bei einer sogenannten Vakuum-Druckwechseladsorption vor, wie sie grundsätzlich aus dem Stand der Technik bekannt ist. Die Methan enthaltende zweite Fraktion oder ein Teil hiervon wird daher vor der weiteren Verarbeitung vorteilhafterweise einer Verdichtung zugeführt, um auf einen für die weitere Verarbeitung geeigneten Druck gebracht werden zu können.

Vorteilhafterweise wird die Methan enthaltende zweite Fraktion oder der der Verdichtung zugeführte Teil hiervon nach der Verdichtung zumindest teilweise einer thermischen Trennung, insbesondere einer Destillation bzw. Rektifikation in einer oder mehreren geeigneten Kolonnen, zugeführt. In dieser thermischen Trennung können insbesondere in der zweiten Fraktion oder einem entsprechenden Teil hiervon enthaltenes Methan und andere leichtere Kohlenwasserstoffe von den hocherstarrenden Kohlenwasserstoffen abgetrennt werden.

Die schwerer als Methan siedenden Kohlenwasserstoffe in dem Einsatzgemisch und in der Methan enthaltenden zweiten Fraktion umfassen insbesondere Propan und/oder zumindest ein Butan, und die Verdichtung wird vorteilhafterweise in Abhängigkeit von dem Gehalt an Propan und/oder an dem zumindest einen Butan in der Methan enthaltenden zweiten Fraktion oder deren der thermischen Trennung zugeführtem Teil ausgewählt. Durch die Methanabreicherung in der Druckwechseladsorption und die anschließende Verdichtung der Methan enthaltenden zweiten Fraktion oder deren Teils können die Partialdrücke z.B. des Propans oder der Butane, so erhöht werden, dass eine Verflüssigung bei Temperaturen über-16 °C möglich ist und Propan und/oder Butan als Wasch- bzw. Lösungsmittel für Entfernung von beispielsweise Neopentan in der eingangs erläuterten Weise genutzt werden können. Der Verdichtungsdruck wird entsprechend hoch gewählt und ggf. mit anderen Prozessanforderungen abgestimmt, z.B. so hoch, dass das insbesondere eine in einer entsprechenden Trennung gewonnene leichte Fraktion der Verflüssigung zugeführt werden kann.

Mit anderen Worten wird im Rahmen der vorliegenden Erfindung in der thermischen Trennung vorteilhafterweise eine gasförmige dritte Fraktion und eine flüssige vierte Fraktion gebildet, wobei die gasförmige dritte Fraktion zumindest Methan enthält und arm an oder frei von dem oder den hocherstarrenden Kohlenwasserstoffen ist. Mit besonderem Vorteil wird ein Teil der gasförmigen dritten Fraktion ebenfalls der Verflüssigung unterworfen. Ein weiterer Teil kann insbesondere als Rücklauf in der thermischen Trennung, die unter Verwendung einer oder mehrerer Rektifikationskolonnen durchgeführt werden kann, verwendet werden.

Die Methanabreicherung und damit die Partialdrücke und eine Trenntemperatur in der thermischen Trennung können durch eine gezielte Rückführung und Rückverdichtung innerhalb des Druckwechseladsorptionsprozesses eingestellt werden. Dies kann durch den Enddruck einer Rückverdichtung und durch einen Anteil der Methan enthaltenden ersten Fraktion, der zur Druckwechseladsorption zurückgeführt wird, erfolgen. Im Rahmen der vorliegenden Erfindung kann also auch ein Teil der Methan enthaltenden ersten Fraktion zur Druckwechseladsorption zurückgeführt werden. Durch die Rückführung kann der Methananteil in der Methan enthaltenden ersten Fraktion reduziert und damit die Temperatur in der Tieftemperaturtrennung erhöht werden. Der Anteil der Methan enthaltenden ersten Fraktion, der zur Druckwechseladsorption zurückgeführt wird, kann beispielsweise 10 bis 80%, insbesondere 30 bis 70% oder 50 bis 70%, beispielsweise ca. 68%, der Methan enthaltenden ersten Fraktion betragen.

Im Rahmen der vorliegenden Erfindung können unterschiedliche thermische Trennungen eingesetzt werden. So kann die thermische Trennung unter Verwendung einer Rektifikationskolonne durchgeführt werden, die derart betrieben wird, dass Kohlenwasserstoffe mit zwei und weniger Kohlenstoffatomen zumindest überwiegend in ein Kopfgas übergehen und dass Kohlenwasserstoffe mit drei und mehr Kohlenstoffatomen zumindest überwiegend in eine Sumpfflüssigkeit übergehen. Die thermische Trennung kann alternativ dazu auch unter Verwendung einer Rektifikationskolonne durchgeführt werden, die derart betrieben wird, dass Kohlenwasserstoffe mit drei und weniger Kohlenstoffatomen zumindest überwiegend in ein Kopfgas übergehen und dass Kohlenwasserstoffe mit vier und mehr Kohlenstoffatomen zumindest überwiegend in eine Sumpfflüssigkeit übergehen.

Je nach eingesetzter thermischer Trennung und ggf. weiterer Aufbereitungsverfahren können im Rahmen der vorliegenden Erfindung auch weitere flüssige Komponentengemische gebildet werden, beispielsweise Autogas (engl. Liquefied Petroleum Gas, LPG) mit überwiegend Propan und Butanen.

Dabei kann die Kopf-bzw. Kondensationstemperatur der jeweils verwendeten Rektifikationskolonnen unterhalb der jeweiligen Erstarrungstemperatur der hocherstarrenden Kohlenwasserstoffe liegen, solange genügend Abstand bzw. eine ausreichende Anzahl von Böden zwischen Einspeisestelle und Kondensator liegen und sich ein hinreichendes Temperaturprofil in der Kolonne ausbildet. Das eigentliche Waschmittel, mittels dessen die hocherstarrenden Kohlenwasserstoffe ausgewaschen werden, wird dabei innerhalb der Kolonne durch vom Kopf herabfließende Kohlenwasserstoffe mit zwei Kohlenstoffatomen und Methan gebildet.

Wie bereits erwähnt, kann im Rahmen der vorliegenden Erfindung das Einsatzgemisch durch Aufbereiten von Erdgas gewonnen werden, wobei das Aufbereiten insbesondere eine Trocknung und eine Kohlendioxidentfernung umfassen kann.

Das Einsatzgemisch wird vorteilhafterweise auf einem ersten Druckniveau bereitgestellt und der Druckwechseladsorption auf einem zweiten Druckniveau zugeführt, wobei das Einsatzgemisch zumindest teilweise durch eine Entspannung in einer oder in mehreren Entspannungsmaschinen auf das zweite Druckniveau gebracht wird. Das zweite Druckniveau entspricht insbesondere dem oberen Druckniveau der Druckwechseladsorption und damit auch dem bereits erläuterten Druckniveau, auf dem die erste Methan enthaltende Fraktion abgegeben werden kann. Mit besonderem Vorteil kann oder können ein oder mehrere Verdichter, der oder die zur Verdichtung der Methan enthaltenden zweiten Fraktion oder deren der Verdichtung zugeführten Teils verwendet werden, mittels der einen oder der mehreren Entspannungsmaschinen angetrieben werden. Auf diese Weise lässt sich entsprechend freiwerdende mechanische Arbeit sinnvoll nutzen. Durch Temperatureinstellung vor der Entspannung kann die Austrittstemperatur d.h. die Eintrittstemperatur in die Druckwechseladsorption, eingestellt werden.

Gemäß einer vorteilhaften Ausgestaltung der Erfindung kann das Aufbereiten des Erdgases insbesondere auch eine Temperaturwechseladsorption umfassen. Auf diese Weise können insbesondere höhere Kohlenwasserstoffe entfernt werden und ein Sumpfprodukt der in der thermischen Trennung verwendeten Rektifikationskolonne kann in entsprechender Weise konditioniert werden.

Die vorliegende Erfindung erstreckt sich auch auf eine Anlage zur Herstellung von Flüssigerdgas unter Verwendung eines Einsatzgemischs, zu deren Merkmalen auf den entsprechenden unabhängigen Patentanspruch verwiesen wird.

Eine entsprechende Anlage ist vorteilhafterweise zur Durchführung eines Verfahrens eingerichtet, wie es zuvor in unterschiedlichen Ausgestaltungen erläutert wurde und weist hierzu jeweils spezifisch eingerichtete Mittel auf. Auf die jeweiligen Erläuterungen, insbesondere bezüglich der jeweiligen Vorteile, wird daher verwiesen.

Eine Ausführungsform der Erfindung wird nachfolgend unter Bezugnahme auf die beigefügte Zeichnung näher erläutert.

### Kurze Beschreibung der Zeichnungen

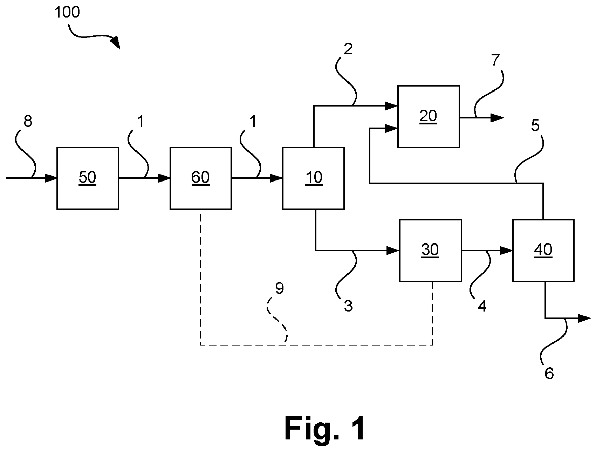

Figur 1 zeigt ein Verfahren gemäß einer Ausführungsform der Erfindung in Form eines stark vereinfachten Verfahrensdiagramms.

### Ausführliche Beschreibung der Zeichnung

In Figur 1 ist ein Verfahren zur Herstellung von Flüssigerdgas gemäß einer Ausführungsform der Erfindung in Form eines stark vereinfachten Verfahrensdiagramms veranschaulicht und insgesamt mit 100 bezeichnet.

In dem Verfahren 100 wird ein Einsatzgemisch, hier in Form eines Stoffstroms 1 veranschaulicht, das zumindest Methan, eine oder mehrere tiefer als Methan siedende Komponenten und einen oder mehrere höher als Methan siedende Kohlenwasserstoffe enthält, einer Druckwechseladsorption 10 zugeführt. Wie erwähnt, umfassen der oder die höher als Methan siedenden Kohlenwasserstoffe einen oder mehrere hocherstarrende Kohlenwasserstoffe mit einem Erstarrungspunkt von mehr als -50 °C.

In der Druckwechseladsorption 10 werden eine, hier in Form eines Stoffstroms 2 veranschaulichte, Methan enthaltende erste Fraktion und eine, hier in Form eines Stoffstroms 3 veranschaulichte, Methan enthaltende zweite Fraktion gebildet.

Die Methan enthaltende erste Fraktion bzw. der Stoffstrom 2 enthält neben dem Methan zumindest den überwiegenden Teil der leichter als Methan siedenden Komponenten aus dem Einsatzgemisch und ist arm an oder frei von den schwerer als Methan siedenden Kohlenwasserstoffen, wie erläutert. Die Methan enthaltende zweite Fraktion bzw. der Stoffstrom 3 enthält, wie ebenfalls erläutert, neben dem Methan zumindest den überwiegenden Teil der schwerer als Methan siedenden Kohlenwasserstoffe aus dem Einsatzgemisch und arm an ist oder frei von den leichter als Methan siedenden Komponenten.

Weil die Methan enthaltende erste Fraktion vorteilhafterweise frei oder im Wesentlichen frei von den zuvor erläuterten kritischen Kohlenwasserstoff-Spezies ist, kann sie, bzw. der Stoffstrom 2, direkt einer Verflüssigung 20 zugeführt werden. Die Methan enthaltende erste Fraktion bzw. der Stoffstrom 2 wird mittels der Druckwechseladsorption 10 auf einem Absolutdruckniveau bereitgestellt, das eine direkte Zuführung zur Verflüssigung 20 erlaubt.

Die Methan enthaltende zweite Fraktion bzw. der Stoffstrom 3 wird in der Druckwechseladsorption 10 auf einem deutlich geringeren Absolutdruckniveau bereitgestellt wird und daher einer Verdichtung 30 zugeführt. Die Methan enthaltende zweite Fraktion oder der der Verdichtung 30 zugeführte Teil hiervon wird, nun in Form eines Stoffstroms 4 veranschaulicht, nach der Verdichtung 30 zumindest teilweise einer thermischen Trennung 40 zugeführt wird.

Details zur thermischen Trennung 40 und ihren Ausgestaltungen wurden bereits mehrfach erläutert. Insbesondere werden in der thermischen Trennung eine gasförmige dritte Fraktion, hier in Form eines Stoffstroms 5 veranschaulicht, und eine flüssige vierte Fraktion, hier in Form eines Stoffstroms 6 veranschaulicht, gebildet, werden, wobei die gasförmige dritte Fraktion bzw. der Stoffstrom 5 zumindest Methan enthält und arm an oder frei von dem oder den hocherstarrenden Kohlenwasserstoffen ist. Sie bzw. er kann daher der Verflüssigung 20 zugeführt werden. Die flüssige vierte Fraktion bzw. der Stoffstrom 6 kann hingegen zur Gewinnung weiterer Produkte aus dem Verfahren 100 ausgeführt werden.

Insbesondere kann im Rahmen der vorliegenden Erfindung eine verflüssigte Erdgasfraktion, hier in Form eines Stoffstroms 7 veranschaulicht, gebildet und aus dem Verfahren 100 ausgeführt werden.

Das Einsatzgemisch bzw. der Stoffstrom 1 kann durch Aufbereiten 50 von Erdgas, das hier in Form eines Stoffstroms 8 veranschaulicht ist, gewonnen werden, wobei das Aufbereiten 50 insbesondere eine Trocknung und Kohlendioxidentfernung umfassen kann. Das Einsatzgemisch bzw. der Stoffstrom 1 kann dabei insbesondere auf einem ersten Druckniveau bereitgestellt und der Druckwechseladsorption 10 auf einem zweiten Druckniveau zugeführt werden. Das Einsatzgemisch kann dabei zumindest teilweise durch eine Entspannung 60 in einer oder in mehreren Entspannungsmaschinen auf das zweite Druckniveau gebracht werden. Hierbei können die Entspannung 60 und die Verdichtung 30 insbesondere gekoppelt werden, wie hier in Form einer gestrichelten Verbindung 9 veranschaulicht. Insbesondere können ein oder mehrere Verdichter, der oder die zur Verdichtung 30 der Methan enthaltenden zweiten Fraktion oder deren der Verdichtung 30 zugeführten Teils, und damit des Stoffstroms 3, verwendet werden, mittels der einen oder der mehreren Entspannungsmaschinen angetrieben werden, die die Entspannung 60 durchführen.

## Patentansprüche

1. Verfahren (100) zur Herstellung von Flüssigerdgas unter Verwendung eines Einsatzgemischs, das zumindest Methan, eine oder mehrere tiefer als Methan siedende Komponenten und einen oder mehrere höher als Methan siedende Kohlenwasserstoffe enthält, wobei der oder die höher als Methan siedenden Kohlenwasserstoffe einen oder mehrere hocherstarrende Kohlenwasserstoffe mit einem Erstarrungspunkt von mehr als -50 °C aufweisen,
**dadurch gekennzeichnet, dass**
- das Einsatzgemisch einer Druckwechseladsorption (10) zugeführt wird, in der eine Methan enthaltende erste Fraktion und eine Methan enthaltende zweite Fraktion gebildet werden,
- die Methan enthaltende erste Fraktion neben dem Methan zumindest den überwiegenden Teil der leichter als Methan siedenden Komponenten aus dem Einsatzgemisch enthält und arm an oder frei von den schwerer als Methan siedenden Kohlenwasserstoffen ist, und
- die Methan enthaltende zweite Fraktion neben dem Methan zumindest den überwiegenden Teil der schwerer als Methan siedenden Kohlenwasserstoffe aus dem Einsatzgemisch enthält und arm an oder frei von den leichter als Methan siedenden Komponenten ist, und
- die Methan enthaltende erste Fraktion oder ein Teil hiervon einer Verflüssigung (20) zugeführt wird.

2. Verfahren (100) nach Anspruch 1, bei dem die Methan enthaltende erste Fraktion mittels der Druckwechseladsorption (10) auf einem Absolutdruckniveau von 20 bis 40 bar bereitgestellt wird, und bei dem die Methan enthaltende erste Fraktion oder der der Verflüssigung (20) zugeführte Teil hiervon der Verflüssigung (20) auf diesem Absolutdruckniveau zugeführt wird.

3. Verfahren (100) nach Anspruch 1 oder 2, bei dem die Methan enthaltende zweite Fraktion in der Druckwechseladsorption auf einem Absolutdruckniveau von 0,1 bis 5 bar bereitgestellt wird, und bei dem die Methan enthaltende zweite Fraktion oder ein Teil hiervon einer Verdichtung (30) zugeführt wird.

4. Verfahren (100) nach Anspruch 3, bei dem die Methan enthaltende zweite Fraktion oder der der Verdichtung (30) zugeführte Teil hiervon nach der Verdichtung (30) zumindest teilweise einer thermischen Trennung (40) zugeführt wird.

5. Verfahren (100) nach Anspruch 4, bei dem die schwerer als Methan siedenden Kohlenwasserstoffe in dem Einsatzgemisch und in der Methan enthaltenden zweiten Fraktion Propan und/oder zumindest ein Butan umfassen, und bei der Verdichtung (30) in Abhängigkeit von dem Gehalt an Propan und/oder an dem zumindest einen Butan in der Methan enthaltenden zweiten Fraktion oder deren der thermischen Trennung (40) zugeführtem Teil ausgewählt wird.

6. Verfahren (100) nach Anspruch 4 oder 5, bei dem in der thermischen Trennung eine gasförmige dritte Fraktion und eine flüssige vierte Fraktion gebildet werden, wobei die gasförmige dritte Fraktion zumindest Methan enthält und arm an oder frei von dem oder den hocherstarrenden Kohlenwasserstoffen ist.

7. Verfahren (100) nach Anspruch 6, bei dem ein Teil der gasförmigen dritten Fraktion ebenfalls der Verflüssigung (20) unterworfen wird.

8. Verfahren (100) nach einem der Ansprüche 4 bis 7, bei dem die thermische Trennung (40) unter Verwendung einer Rektifikationskolonne durchgeführt wird, die derart betrieben wird, dass Kohlenwasserstoffe mit zwei und weniger Kohlenstoffatomen zumindest überwiegend in ein Kopfgas übergehen und dass Kohlenwasserstoffe mit drei und mehr Kohlenstoffatomen zumindest überwiegend in eine Sumpfflüssigkeit übergehen.

9. Verfahren (100) nach einem der Ansprüche 4 bis 8, bei dem die thermische Trennung (40) unter Verwendung einer Rektifikationskolonne durchgeführt wird, die derart betrieben wird, dass Kohlenwasserstoffe mit drei und weniger Kohlenstoffatomen zumindest überwiegend in ein Kopfgas übergehen und dass Kohlenwasserstoffe mit vier und mehr Kohlenstoffatomen zumindest überwiegend in eine Sumpfflüssigkeit übergehen.

10. Verfahren (100) nach einem der Ansprüche 3 bis 9, bei dem das Einsatzgemisch durch Aufbereiten (50) von Erdgas gewonnen wird, wobei das Aufbereiten (50) eine Trocknung und Kohlendioxidentfernung umfasst.

11. Verfahren (100) nach einem der Ansprüche 3 bis 10, bei dem das Einsatzgemisch auf einem ersten Druckniveau bereitgestellt und der Druckwechseladsorption (10) auf einem zweiten Druckniveau zugeführt wird, wobei das Einsatzgemisch zumindest teilweise durch eine Entspannung (60) in einer oder in mehreren Entspannungsmaschinen auf das zweite Druckniveau gebracht wird.

12. Verfahren (100) nach Anspruch 11, bei dem ein oder mehrere Verdichter, der oder die zur Verdichtung (30) der Methan enthaltenden zweiten Fraktion oder deren der Verdichtung (30) zugeführten Teils verwendet werden, mittels der einen oder der mehreren Entspannungsmaschinen angetrieben werden.

13. Verfahren (100) nach einem der Ansprüche 10 bis 12, bei dem das Aufbereiten (50) eine Temperaturwechseladsorption umfasst.

14. Anlage zur Herstellung von Flüssigerdgas unter Verwendung eines Einsatzgemischs, das zumindest Methan, eine oder mehrere tiefer als Methan siedende Komponenten und einen oder mehrere höher als Methan siedende Kohlenwasserstoffe enthält, wobei der oder die höher als Methan siedenden Kohlenwasserstoffe einen oder mehrere hocherstarrende Kohlenwasserstoffe mit einem Erstarrungspunkt von mehr als -50 °C aufweisen,
**gekennzeichnet durch**
- Mittel, die dafür eingerichtet sind, das Einsatzgemisch einer Druckwechseladsorption (10) zuzuführen und dort eine Methan enthaltende erste Fraktion und eine Methan enthaltende zweite Fraktion zu bilden,
- wobei die Methan enthaltende erste Fraktion neben dem Methan zumindest den überwiegenden Teil der leichter als Methan siedenden Komponenten aus dem Einsatzgemisch enthält und arm an oder frei von den schwerer als Methan siedenden Kohlenwasserstoffen ist, und
- wobei die Methan enthaltende zweite Fraktion neben dem Methan zumindest den überwiegenden Teil der schwerer als Methan siedenden Kohlenwasserstoffe aus dem Einsatzgemisch enthält und arm an oder frei von den leichter als Methan siedenden Komponenten ist, und
- Mittel, die dafür eingerichtet sind, die Methan enthaltende erste Fraktion oder einen Teil hiervon einer Verflüssigung (20) zuzuführen.
